# EUROPÄISCHE PATENTSCHRIFT

(11) **EP 1 693 148 B1**
(45) Veröffentlichungstag und Bekanntmachung des Hinweises auf die Patenterteilung: **19.03.2008**
(21) Anmeldenummer: 05025278.2
(22) Anmeldetag: 18.11.2005
(51) Int. Cl.: B23Q 11/00, B23Q 1/28, B23Q 3/18

(54) **Doppelspindel-Werkzeugmaschine mit zwei Werkstückhaltern, von denen einer verstellbar ist**
Twinspindle machine tool with two workholders, one of which is adjustable
Machine-outil bibroche avec deux porte-pièces dont l'un est ajustable

(30) Priorität: 16.02.2005 EP 05003226
(43) Veröffentlichungstag der Anmeldung: 23.08.2006
(73) Patentinhaber: Cross Hüller GmbH, 71636 Ludwigsburg (DE)
(72) Erfinder: Hillinger, Alfred, 71711 Murr (DE); Bruder, Hubert, 71636 Ludwigsburg (DE)
(74) Vertreter: Rau, Manfred

(56) Entgegenhaltungen:
- EP-A- 0 412 635
- EP-A- 1 260 304
- EP-A- 1 524 068
- WO-A-20/04067223
- WO-A-20/05025801
- US-A- 5 105 694
- US-A- 6 139 002
- US-B1- 6 286 823
- PATENT ABSTRACTS OF JAPAN Bd. 011, Nr. 302 (M-629), 2. Oktober 1987 (1987-10-02) & JP 62 094202 A (IKEGAI CORP), 30. April 1987 (1987-04-30)

## Beschreibung

Die Erfindung betrifft eine Doppelspindel-Werkzeugmaschine nach dem Oberbegriff des Anspruches 1.

Derartige Doppelspindel-Werkzeugmaschinen sind allgemein bekannt, beispielsweise aus der WO 2004/067223 A1. Ein Grundproblem dieser Doppelspindel-Werkzeugmaschinen liegt darin, dass der Abstand zwischen den Drehachsen der Werkzeug-Spindeln nicht exakt einhaltbar ist. Dies liegt zum einen darin, dass die Spindeln nicht absolut exakt zueinander ausgerichtet werden können. Zum anderen liegt dies sehr wesentlich daran, dass der Abstand der Werkzeug-Spindeln sich unter dem Einfluss zahlreicher Temperatureinflüsse, z. B. von der Maschine und von der Umgebung her, ändert.

Aus der JP 62-94202 A ist eine Mehrspindel-Drehbank bekannt, die zwei Hauptspindeln aufweist, in deren Spannfutter jeweils ein Werkstück eingespannt werden kann. Auf dem Maschinenbett sind weiterhin zwei verstellbare Werkzeug-Träger angebracht. Zur Kompensation von temperaturbedingten Abstandsänderungen zwischen den Achsen der Werkstück-Spindeln und den im jeweiligen Werkstück in Eingriff kommenden Werkzeugen sind die Werkzeug-Träger mittels Verschiebe-Vorrichtungen miteinander gekoppelt. Diese thermisch arbeitenden Verschiebe-Einrichtungen arbeiten in der Weise, dass die Abstände der Achsen der Spindeln erfasst werden; bei Abweichungen von einem vorgegebenen Maß erfolgt eine entsprechende thermische Beaufschlagung der Verschiebe-Einrichtungen, bis die benachbarten Werkzeug-Träger wieder einen entsprechenden vorgegebenen Abstand voneinander haben.

Der Erfindung liegt die Aufgabe zugrunde, Abstandsänderungen der Drehachsen der Werkzeug-Spindeln mit relativ einfachen Mitteln auch während des Betriebs der Maschine kompensieren zu können.

Diese Aufgabe wird erfindungsgemäß durch die Merkmale im Kennzeichnungsteil des Anspruches 1 gelöst. Der Kern der Erfindung liegt darin, dass der Abstand der Drehachsen der Werkzeug-Spindeln direkt oder indirekt ständig oder in Zeitabständen gemessen wird und dass entsprechend diesem Ergebnis ein Werkstück oder ein Werkstück-Halter nachgestellt wird. Dies kann stufenlos oder schrittweise erfolgen, und zwar rotatorisch direkt über die zugeordnete Werkzeug-Spindel oder durch einen Tastbetrieb. Zahlreiche vorteilhafte Ausgestaltungen hierzu ergeben sich aus den Unteransprüchen.

Weitere Merkmale, Vorteile und Einzelheiten der Erfindung ergeben sich aus der nachfolgenden Beschreibung von Ausführungsbeispielen anhand der Zeichnung. Es zeigt
- Fig. 1: eine Stirnansicht einer Werkzeugmaschine nach der Erfindung,
- Fig. 2: eine perspektivische Ansicht einer Grundplatte mit einer Werkstück-Tragplatte der Werkzeugmaschine,
- Fig. 3: ein verstellbares Widerlager für die Werkstück-Tragplatte,
- Fig. 4: eine Antriebs-Einrichtung für das verstellbare Widerlager,
- Fig. 5: eine Stirnansicht einer gegenüber Fig. 1 abgewandelten Ausführungsform einer Werkzeugmaschine nach der Erfindung,
- Fig. 6: eine perspektivische Ansicht einer Grundplatte der Werkzeugmaschine nach Fig. 5 mit aufgespanntem Werkstück,
- Fig. 7: eine Draufsicht auf die Grundplatte nach Fig. 6,
- Fig. 8: einen Querschnitt durch die Grundplatte nach Fig. 6 im Bereich eines verstellbaren Widerlagers und
- Fig. 9: einen Querschnitt durch eine Verstell-Einrichtung für das Widerlager nach Fig. 8.

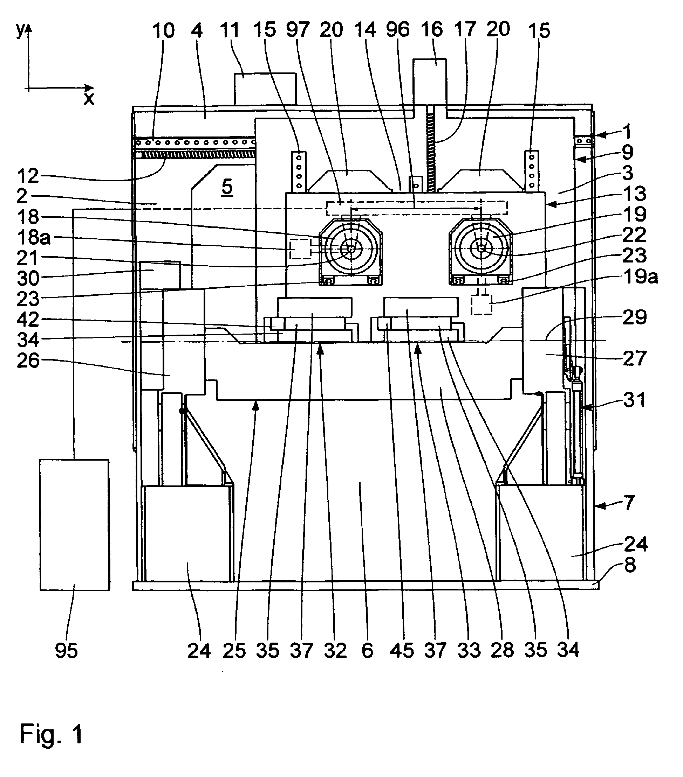

Bei der in Fig. 1 dargestellten Werkzeugmaschine handelt es sich um eine Doppelspindel-Werkzeugmaschine mit einem rechteckigen, durch einen Rahmen gebildeten Ständer 1, der durch sich in y-Richtung erstreckende vertikale Seiten-Stützen 2, 3 und jeweils einen diese verbindenden horizontalen, sich in x-Richtung erstreckenden oberen Quer-Holm 4 und einen unteren, nicht dargestellten Quer-Holm gebildet ist. Die Seiten-Stützen 2, 3 und die Quer-Holme 4 umschließen einen Innenraum 5, der beidseitig offen ist, und zwar insbesondere zum Arbeitsraum 6 hin. Der Ständer 1 ist über ein Untergestell 7 auf einer Fundament-Platte 8 abgestützt.

An der dem Arbeitsraum 6 zugewandten Stirnseite des Ständers 1 ist ein ebenfalls rahmenartig ausgebildeter x-Schlitten 9 in x-Richtung verschiebbar angeordnet. Hierzu sind an den Quer-Holmen 4 jeweils eine x-Führungs-Schiene 10 angebracht, auf denen der x-Schlitten 9 geführt ist. Der Antrieb des x-Schlittens 9 erfolgt mittels eines x-Motors 11 über eine sich in x-Richtung erstreckende, in den Seiten-Stützen 2, 3 des Ständers 1 drehfest gelagerte x-Kugelrollspindel 12.

Auf der dem Arbeitsraum 6 zugewandten Stirnseite des x-Schlittens 9 ist ein in y-Richtung, also vertikal, verschiebbarer y-Schlitten 13 geführt. Hierzu sind an den Seitenbereichen und einem vertikalen Mittel-Steg 14 des rahmenartigen x-Schlittens 9 jeweils eine y-Führungs-Schiene 15 angebracht, auf denen der y-Schlitten 13 verschiebbar geführt ist. Der Antrieb des y-Schlittens 13 erfolgt mittels eines auf dem x-Schlitten 9 angebrachten y-Motors 16 über eine y-Kugelrollspindel 17.

Auf dem y-Schlitten 13 befinden sich im Abstand voneinander zwei Werkzeug-Spindeln 18, 19, die sich in z-Richtung erstrecken und nach vom zum Arbeitsraum 6 hin und nach hinten durch die inneren Freiräume 20 des x-Schlittens 9 in den Innenraum 5 des Ständers 1 hineinragen. Die Werkzeug-Spindeln 18, 19 sind jeweils um eine sich in z-Richtung erstreckende z-Drehachse 21, 22 mittels jeweils eines nur angedeuteten Antriebsmotors 18a drehantreibbar. Die Werkzeug-Spindeln 18, 19 sind in x- und y-Richtung relativ zueinander ortsfest auf dem y-Schlitten angeordnet, in z-Richtung jedoch auf z-Führungs-Schienen 23 mittels jeweils eines nur angedeuteten z-Motors 19a verschiebbar angeordnet.

Im Arbeitsraum 6 ist vor dem Ständer 1 auf der Fundament-Platte 8 ein Werkstück-Träger-Bett 24 gelagert, auf dem ein Werkstück-Träger 25 abgestützt ist. Der Werkstück-Träger 25 ist nach Art einer Brücke ausgebildet, die auf dem Werkstück-Träger-Bett 24 abgestützte Seiten-Wangen 26, 27 aufweist, in denen ein Schwenk-Träger 28 um eine in x-Richtung verlaufende Schwenkachse 29 schwenkbar gelagert ist. Der Schwenk-Antrieb erfolgt mittels eines Schwenk-Motors 30.

An dem dem Schwenk-Motor 30 abgewandten Ende des Schwenk-Trägers 28, also im Bereich der diesem Ende zugeordneten Seiten-Wange 27, greift am Schwenk-Träger 28 eine Torsions-Kompensations-Einrichtung 31 an, die in jeder Position eine im Wesentlichen konstante Kraft ausübt.

Auf dem Schwenk-Träger 28 sind zwei Werkstück-Halter 32, 33 angeordnet, die als Y-Drehtische ausgebildet sein können.

Die bisher geschilderte Werkzeugmaschine ist aus der EP-Patentanmeldung 03 023 017.1 bekannt. Bezüglich weiterer Einzelheiten, insbesondere bezüglich der Ausgestaltung der Torsions-Kompensations-Einrichtung 31 darf hierauf verwiesen werden.

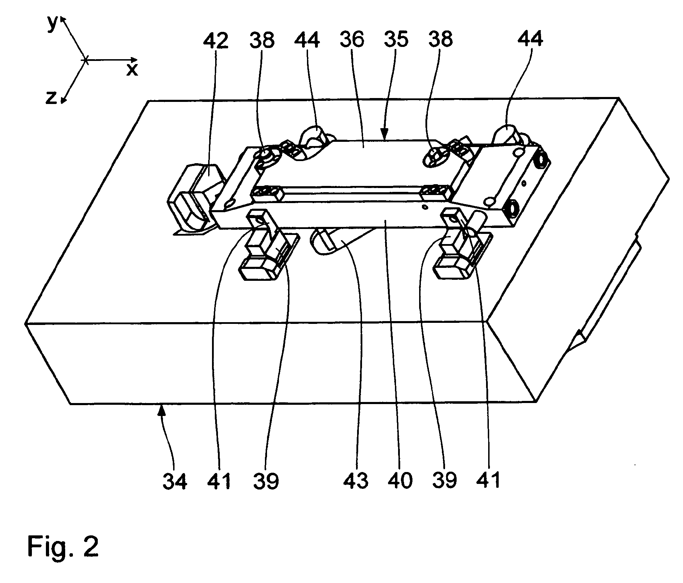

Die Werkstück-Halter 32, 33 weisen jeweils eine auf dem Schwenk-Träger 28 angebrachte Grundplatte 34 auf, auf der wiederum eine Werkstück-Tragplatte 35 angeordnet ist. Wie sich im Wesentlichen aus Fig. 2 ergibt, weist die im Wesentlichen quaderförmige Werkstück-Tragplatte 35 eine Auflagefläche 36 für ein Werkstück 37 auf. Sie ist mit zwei über die Auflagefläche 36 in y-Richtung vorragenden Index-Zapfen 38 versehen, die in im Durchmesser gleiche Index-Bohrungen in der der Auflagefläche 36 zugewandten Bezugsfläche des Werkstücks 37 eingreifen, wodurch die Lage des Werkstücks 37 zur Tragplatte 35 in der durch die Auflagefläche 36 vorgegebenen Ebene festgelegt wird. Das Werkstück 37 wird mittels nicht dargestellter Halteschrauben gegen die Auflagefläche 36 der Tragplatte 35 gespannt.

An der Tragplatte 35 und der Grundplatte 34 sind Einrichtungen vorgesehen, die eine schnelle und lagegenaue Verbindung zwischen der Grundplatte 34 und der Werkstück-Tragplatte 35 ermöglichen, so dass das Werkstück 37, wenn es zusammen mit der Tragplatte 35 von einer Werkzeugmaschine zu einer mit dieser verketteten weiteren Werkzeugmaschine und von dort wieder zur nächsten verketteten Werkzeugmaschine transportiert wird, jeweils nach Befestigung der Werkstück-Tragplatte 35 an einer jeder Werkzeugmaschine zugeordneten identischen Grundplatte 34 eine genau definierte Lage zu jeder Werkzeugmaschine hat.

Hierzu sind an der Grundplatte 34 zwei gleichartig ausgebildete Halteelemente 39 angebracht, denen an der zugewandten Seitenfläche 40 der Tragplatte 35 angebrachte Gegen-Halteelemente 41 zugeordnet sind. Durch entsprechende Ausgestaltung der Halteelemente 39 und der Gegen-Halteelemente 41 wird die Tragplatte 35 beim Andrücken gegen die Halteelemente 39 in z-Richtung in ihrer Lage festgelegt und in y-Richtung nach unten gedrückt.

An der Grundplatte 34 ist weiterhin ein Widerlager 42 angeordnet, gegen das die Werkstück-Tragplatte 35 in x-Richtung in exakter Position anliegt.

Weiterhin ist an der Grundplatte 34 zwischen dieser und der Tragplatte 35 eine in der x-z-Ebene wirkende Schräg-Spann-Einrichtung 43 vorgesehen, die schräg zur x-Richtung und schräg zur z-Richtung wirkt und bei entsprechender Beaufschlagung die Tragplatte 35 sowohl gegen die Halteelemente 39 als auch gegen das Widerlager 42 drückt. Auf der der Seitenfläche 40 gegenüberliegenden Seite der Tragplatte 35 sind an der Grundplatte 35 Nieder-Spann-Einrichtungen 44 vorgesehen, mittels derer die Tragplatte 35 auf die Grundplatte 34 niedergespannt wird.

Die bisher geschilderte Grundplatte 34 mit Werkstück-Tragplatte 35 ist aus der EP 1 260 304 B1 (entsprechend US 6,619,641 B2) bekannt.

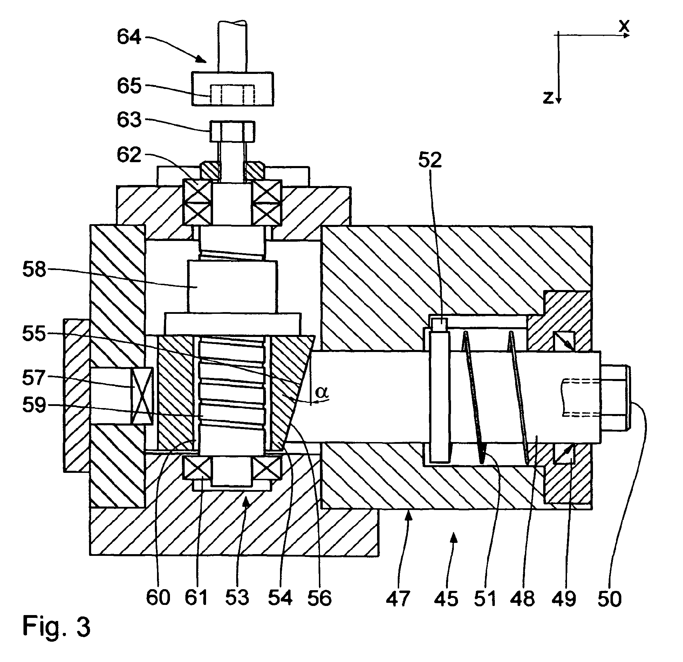

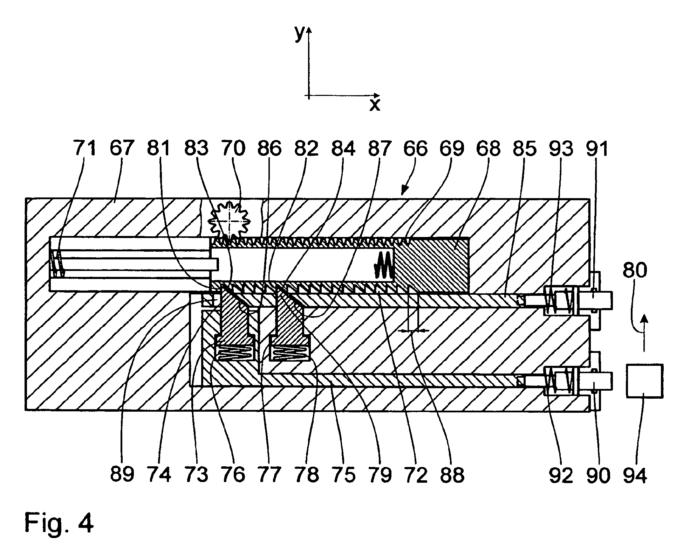

Während bei dem in Fig. 1 links dargestellten Werkzeug-Halter 32 das Widerlager 42 entsprechend der Darstellung in Fig. 2 in x-Richtung ortsfest - wenn auch gegebenenfalls von Hand einstellbar - ausgebildet ist, ist bei dem in Fig. 1 rechts dargestellten Werkstück-Halter 33 ein in x-Richtung fein verstellbares Widerlager 45 vorgesehen, für das Ausgestaltungen in den Fig. 3 und 4 dargestellt sind.

Das in Fig. 3 dargestellte Widerlager 45 weist ein mehrteiliges Gehäuse 47 auf, in dem ein bolzenartiger Widerlager-Körper 48 in x-Richtung verschiebbar und mittels einer Dichtung 49 staubdicht gelagert ist. Er weist an seinem aus dem Gehäuse 47 herausragenden Ende eine Anschlag-Fläche 50 auf, die gegen die Werkstück-Tragplatte 35 anliegt, gegen die sich also die Werkstück-Tragplatte 35 in x-Richtung abstützt. Der Widerlager-Körper 48 wird mittels einer vorgespannten Schrauben-Druck-Feder 51 in seine weitestmöglich in das Gehäuse 47 hineingeschobene Stellung gedrückt. Der Widerlager-Körper 48 ist in dem Gehäuse 47 mittels einer Verdreh-Sicherung 52 undrehbar gelagert, ist also nur in x-Richtung verschiebbar, und im Übrigen in y- und z-Richtung spielfrei im Gehäuse 47 gelagert.

An dem der Anschlag-Fläche 50 entgegengesetzten Ende des Widerlager-Körpers 48 ist im Gehäuse 47 eine Verstell-Einrichtung 53 vorgesehen. Diese weist einen Verstell-Körper 54 auf, der mittels einer Keilfläche 55 gegen eine Gegen-Keilfläche 56 anliegt, die an dem im Gehäuse 47 befindlichen Ende des Widerlager-Körpers 48 ausgebildet ist. Der Verstell-Körper 54 ist im Gehäuse 47 in z-Richtung, also senkrecht zu der die Verschieberichtung des Widerlager-Körpers 48 definierenden x-Richtung verschiebbar gelagert. Er ist im Gehäuse 47 mittels einer Verdreh-Sicherung 57 undrehbar gelagert und im Übrigen in x- und y-Richtung spielfrei abgestützt.

Der Verstell-Körper 54 ist einstückig, auf jeden Fall aber drehfest mit einer Spindel-Mutter 58 ausgebildet bzw. verbunden, die von einer Gewinde-Spindel 59 in z-Richtung durchsetzt wird. Hierzu weist der Verstell-Körper 52 eine Durchgangs-Öffnung 60 auf. Die Spindel 59 ist im Gehäuse 47 mittels Lagern 61, 62 in ihrer Längsrichtung, also in z-Richtung, unverschiebbar und im Übrigen frei drehbar gelagert. Zum Drehantrieb der Spindel 59 ist an deren außerhalb des Gehäuses 47 befindlichen, der Werkzeug-Spindel 19 zugewandten Ende ein Mehrkant-Profil 63 ausgebildet.

Durch Verdrehen der Spindel 59 werden die Keilflächen 55, 56 im Wesentlichen in z-Richtung gegeneinander verschoben, wodurch der Widerlager-Körper 48 mit der Anschlag-Fläche 50 in x-Richtung verschoben wird. Da der Keilwinkel α gegenüber der z-Richtung, also gegenüber der Verschieberichtung des Verstell-Körpers 54, sehr klein ist, besteht zwischen dem Verstell-Körper 54 und dem Widerlager-Körper 48 Selbsthemmung, d. h. es kann keine Verschiebung des Widerlager-Körpers 48 aufgrund der hohen Andrückkräfte zwischen Tragplatte 35 und Widerlager-Körper 48 stattfinden. Entsprechend gilt dies auch für den durch die Spindel 59 und die Spindel-Mutter 58 gebildeten Antrieb, der ebenfalls selbsthemmend ausgestaltet ist. Dadurch, dass der Keilwinkel α sehr klein ist, findet gleichzeitig auch noch eine Untersetzung der Bewegung des Verstell-Körpers 54 in z-Richtung in die Bewegung des Widerlager-Körpers 48 in x-Richtung statt.

Die Verstellung des Verstell-Körpers 54 durch Verdrehen der Spindel 59 erfolgt über ein Werkzeug 64 mit einem dem Mehrkant-Profil 63 komplementären Mehrkant-Steck-Profil 65, das nach Art eines Steckschlüssels ausgebildet ist. Das Werkzeug 64 wird zur jeweiligen Einstellung der Anschlag-Fläche 50 und damit der Werkstück-Tragplatte 35 in x-Richtung in die Werkzeug-Spindel 19 aufgenommen und von dieser angetrieben. Durch entsprechendes Verfahren des x-Schlittens 9 und des y-Schlittens 13 und der Werkzeug-Spindel 19 in z-Richtung wird das Mehrkant-Steck-Profil 65 des Werkzeugs 64 mit dem Mehrkant-Profil 63 in Eingriff gebracht, woraufhin dann die geschilderte Verstellung erfolgt. Durch diese Ausgestaltungen ist eine stufenlose Verstellung der Anschlag-Fläche 50 in x-Richtung möglich.

Bei der Ausgestaltung nach Fig. 4 wird die Spindel 59 mittels einer von der Werkzeug-Spindel 19 unabhängigen Antriebs-Einrichtung 66 angetrieben. Diese weist ein sich im Wesentlichen in Richtung des Widerlager-Körpers 48, also in x-Richtung, erstreckendes Gehäuse 67 auf, in dem ein länglich ausgebildeter weitgehend hohler Antriebs-Körper 68 in x-Richtung verschiebbar angeordnet ist. Er trägt an seiner Oberseite eine Antriebs-Verzahnung 69, in die ein mit der Spindel 59 gekoppeltes Antriebs-Ritzel 70 eingreift. Der hohl ausgebildete Antriebs-Körper 68 wird mittels einer vorgespannten Schrauben-Druck-Feder 71 in eine - in Fig. 4 rechte - Lage gedrückt.

An der der Antriebs-Verzahnung 69 entgegengesetzten unteren Seite ist der Antriebs-Körper 68 mit einer Rast-Verzahnung 72 versehen. In diese Rast-Verzahnung 72 greift ein quer zur in x-Richtung liegenden Verschieberichtung des Antriebs-Körpers 68 - in der Zeichnung in y-Richtung - verschiebbares riegelartiges Verstell-Element 73 mit einem MitnehmerVorsprung 74 ein. Das Verstell-Element 73 ist in einem in Verschieberichtung des Antriebs-Körpers 68 im Gehäuse 67 verschiebbaren Verstell-Schieber 75 verschiebbar gelagert und wird mittels einer vorgespannten Druck-Feder 76 gegen die Rast-Verzahnung 72 gedrückt. Benachbart zum Verstell-Element 73 ist ein ebenfalls riegelartiges Rast-Element 77 im Gehäuse 67 verschiebbar gelagert und ebenfalls mittels einer Druck-Feder 78 in Richtung zur Rast-Verzahnung 72 belastet, in die es mit einem Rast-Vorsprung 79 eingreift. Die Rast-Verzahnung 72, der MitnehmerVorsprung 74 des Verstell-Elementes 73 und der Rast-Vorsprung 79 des Rast-Elementes 77 sind komplementär zueinander ausgebildet. Sie weisen jeweils eine in Verschiebe-Richtung 80 der Elemente 73, 77 verlaufende Haltefläche 81 bzw. 82 und eine schräg geneigt hierzu verlaufende Gleitfläche 83 bzw. 84 auf.

Benachbart zur Rast-Verzahnung 72 und parallel zur in x-Richtung verlaufenden Verschiebe-Richtung des Antriebs-Körpers 68 ist eine Entriegelungs-Stange 85 im Gehäuse 67 verschiebbar gelagert. Diese weist eine mit der Gleitfläche 83 des Verstell-Elementes 73 zusammenwirkende Entriegelungs-Fläche 86 und eine mit der Gleitfläche 84 des Rast-Elements 77 zusammenwirkende weitere Entriegelungs-Fläche 87 auf. Bei einer Verschiebung der Entriegelungs-Stange 85 in das Gehäuse 67 hinein werden sowohl das Verstell-Element 73 als auch das Rast-Element 77 außer Eingriff mit der Rast-Verzahnung 72 gebracht.

Bei einer Betätigung des Verstell-Schiebers 75 in das Gehäuse 67 hinein nimmt dagegen das Verstell-Element 73 den Antriebs-Körper 68 mit, während das Rast-Element 77 aus der Rast-Verzahnung 72 hinaus gedrückt wird und dann wieder einrastet. Der Antriebs-Körper 68 kann also entsprechend der Zahn-Teilung 88 der Antriebs-Verzahnung schrittweise verstellt werden. Diese schrittweise Verstellung wird über das Antriebs-Ritzel 70 auf die Spindel 59 übertragen und führt entsprechend zu einer schrittweisen Verstellung der Anschlag-Fläche 50, wobei die Größe der jeweiligen Verstellschritte für die Anschlag-Fläche 50 im Bereich von 1 µm liegt. Damit bei einer Betätigung des Verstell-Elements 73 zur Verstellung der Spindel 59 die Entriegelungs-Stange 85 nicht von dem Verstell-Element 73 mitgenommen wird, ist in der Entriegelungs-Stange 85 in Verschiebe-Richtung vor dem Verstell-Element 73 eine ausreichend große Ausnehmung 89 ausgebildet.

Sowohl der Verstell-Schieber 75 als auch die Entriegelungs-Stange 85 ragen aus dem Gehäuse 67 hinaus und weisen dort Betätigungs-Zapfen 90 bzw. 91 auf. Sie sind mit Druck-Federn 92, 93 belastet, die sie in ihre Ruhestellung drücken, in der die Betätigungs-Zapfen 90, 91 ihre am weitesten aus dem Gehäuse 67 herausragende Position aufweisen.

Die Betätigung des Verstell-Elementes 73 bzw. der Entriegelungs-Stange 85 erfolgt ebenfalls über die Werkzeug-Spindel 19, und zwar mittels eines Betätigungs-Elementes 94, das in die Spindel 19 eingespannt und dann bei stillstehender Werkzeug-Spindel 19 durch Verfahren in x-y- und z-Richtung vor einen der Betätigungs-Zapfen 90 bzw. 91 gebracht wird. Durch Verschieben in x-Richtung wird dann der Betätigungs-Zapfen 90 bzw. 91 betätigt. Dieses Betätigungs-Element 94 kann aber auch fest an der Werkzeug-Spindel 19 angebracht sein. Wenn das Werkzeug 64 oder das Betätigungs-Element 94 in die Werkzeug-Spindel 19 eingespannt werden, können sie in einem Werkzeug-Magazin abgelegt sein, das an der Werkzeugmaschine angebracht ist. Derartige Ausgestaltungen sind vielfältig bekannt, beispielsweise aus der EP 0 806 998 B1, dem US-Patent 6,071,220 und der WO 2004/091852 A1. Die Auslösung der geschilderten Verstell-Vorgänge erfolgt über die Steuerung 95 der Werkzeugmaschine. Diese erhält in regelmäßigen Zeitabständen, beispielsweise von wenigen Minuten, eine Information über den Abstand 96 der z-Drehachsen 21, 22 der Werkzeug-Spindeln 18, 19. Diese Messung wird von einer in der Werkzeugmaschine befindlichen Abstands-Mess-Einrichtung 97 an die Steuerung 95 gegeben. Diese vergleicht den Ist-Wert des Abstandes 96 mit einem gespeicherten Soll-Wert und bringt diesen Ist-Wert wieder auf den Soll-Wert, und zwar durch entsprechende Verstellung, wie sie vorstehend geschildert worden ist.

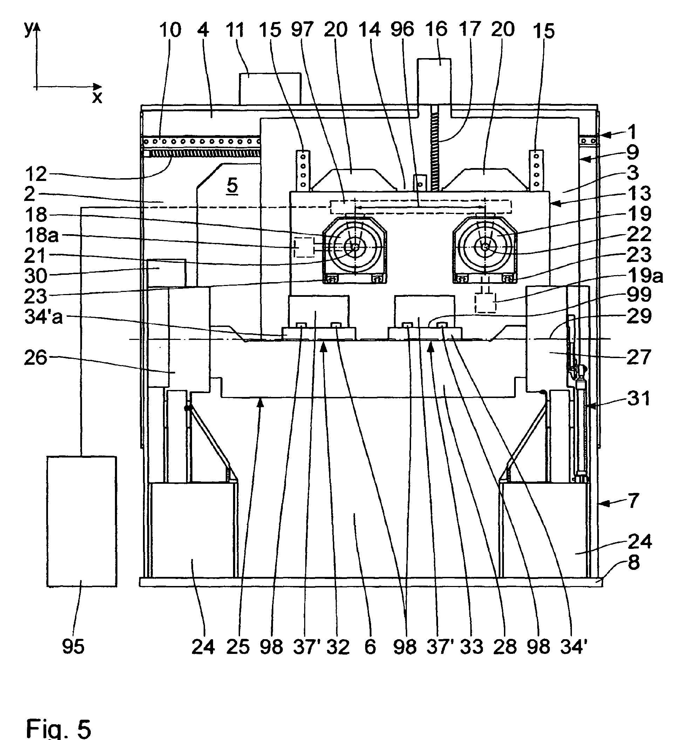

Soweit das zweite Ausführungsbeispiel nach den Fig. 5 bis 9 mit dem ersten Ausführungsbeispiel nach den Fig. 1 bis 4 übereinstimmt, bedarf es keiner erneuten Beschreibung; es werden dieselben Bezugsziffern in den Zeichnungen verwendet. Soweit funktionell gleiche, aber konstruktiv geringfügig andere Teile vorgesehen sind, werden die gleichen Bezugsziffern wie in den Fig. 1 bis 4 verwendet, jedoch mit einem hochgesetzten Strich versehen. Auch insoweit bedarf es keiner erneuten Beschreibung.

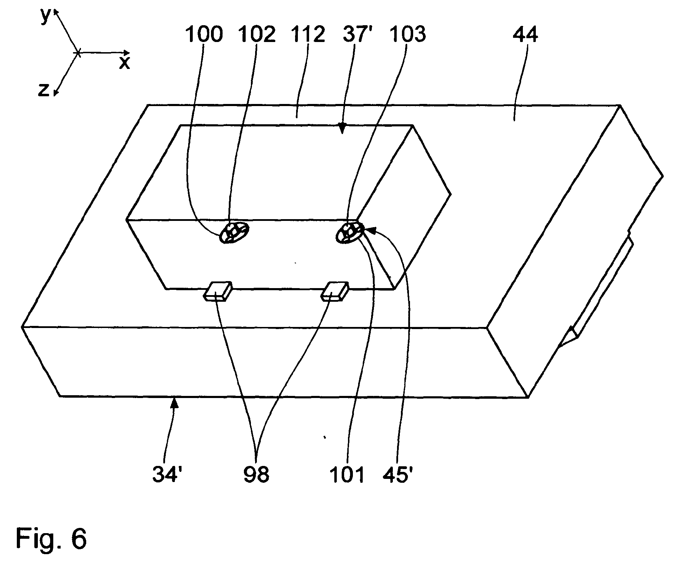

Wie sich aus Fig. 5 ergibt, sind bei dem zweiten Ausführungsbeispiel auf dem Schwenk-Träger 28 Grundplatten 34', 34'a angeordnet, auf denen Werkstücke 37' direkt mittels Spann-Vorrichtungen 98 befestigt werden. Die Werkstück-Tragplatten 35 und entsprechend die Widerlager 42, 45 aus dem ersten Ausführungsbeispiel sind also nicht vorhanden. An der auf der Grundplatte 34' aufliegenden Unterseite 99 des Werkstücks 37' sind zwei Zentrier-Bohrungen 100, 101 ausgebildet. In die eine Zentrier-Bohrung 100 greift ein an der Grundplatte 34' ausgebildeter sogenannter Schwert-Bolzen 102 ein, der - wie aus Fig. 6 hervorgeht - in Form eines schlanken Rhombus ausgebildet ist. In die andere Zentrier-Bohrung 101 greift ein der Zentrier-Bohrung 101 spielfrei angepasster Index-Bolzen 103 ein, der exzentrisch auf einer Stellwelle 104 angebracht ist. Dieser Index-Bolzen 103 und die Stellwelle 104 bilden ein verstellbares Widerlager 45'. Die Stellwelle 104 bildet einen Widerlager-Körper 48'. Der Index-Bolzen 103 und der Schwert-Bolzen 102 dienen zum Ausrichten des Werkstücks 37' in x-Richtung.

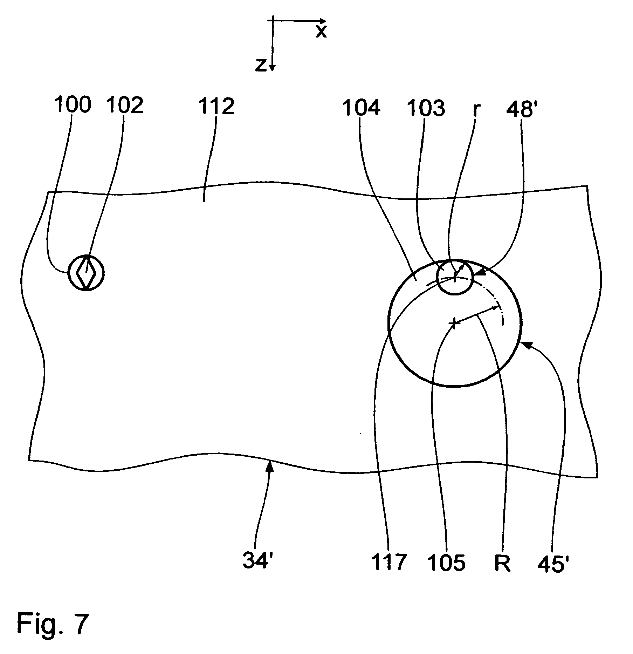

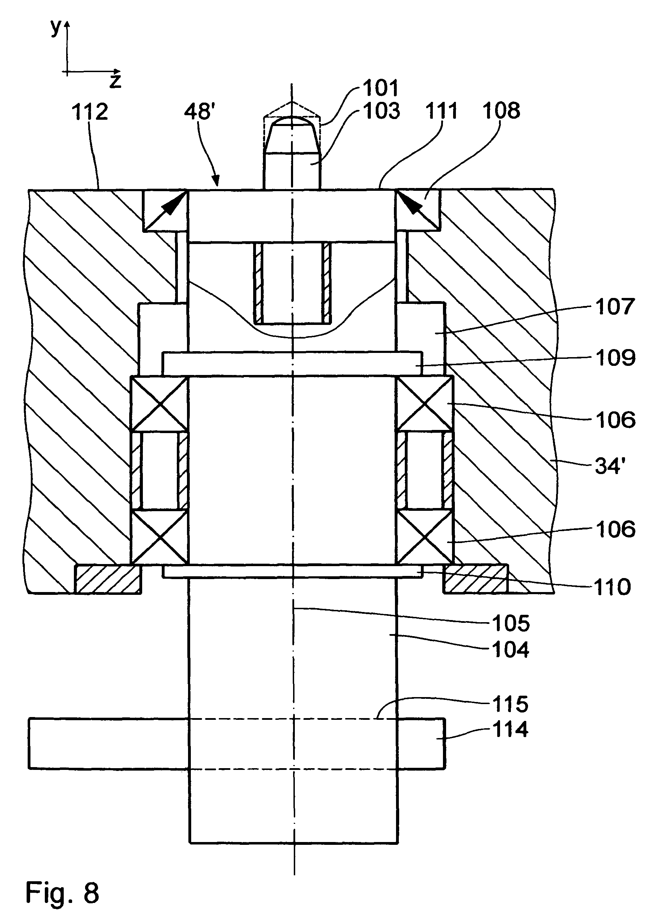

Wie Fig. 7 und 8 entnehmbar ist, ist die Stellwelle 104 um ihre Mittel-Längs-Achse 105 schwenkbar in der Grundplatte 34' gelagert, wobei die Achse 105 sich in y-Richtung erstreckt. Die Stellwelle 104 ist mittels Lagern 106 in einer entsprechenden Ausnehmung 107 der Grundplatte 34' gelagert und zum jeweiligen Werkstück 37' hin mittels einer Dichtung 108 abgedichtet. Die axiale Festlegung der Stellwelle 104 erfolgt mittels eines an der Stellwelle 104 ausgebildeten Ringbundes 109 und mittels eines lösbar an der Stellwelle 104 festgelegten Seeger-Ringes 110. Der Ringbund 109 und der Seeger-Ring 110 liegen gegen die Lager 106 an. Die Stellwelle 104 endet mit ihrer oberen Stirnseite 111 fluchtend mit der Oberseite 112 der Grundplatte 34'. Der Index-Bolzen 103, der an der Stirnseite 111 ausgebildet ist, steht demzufolge nach oben über die Grundplatte 34' in y-Richtung vor.

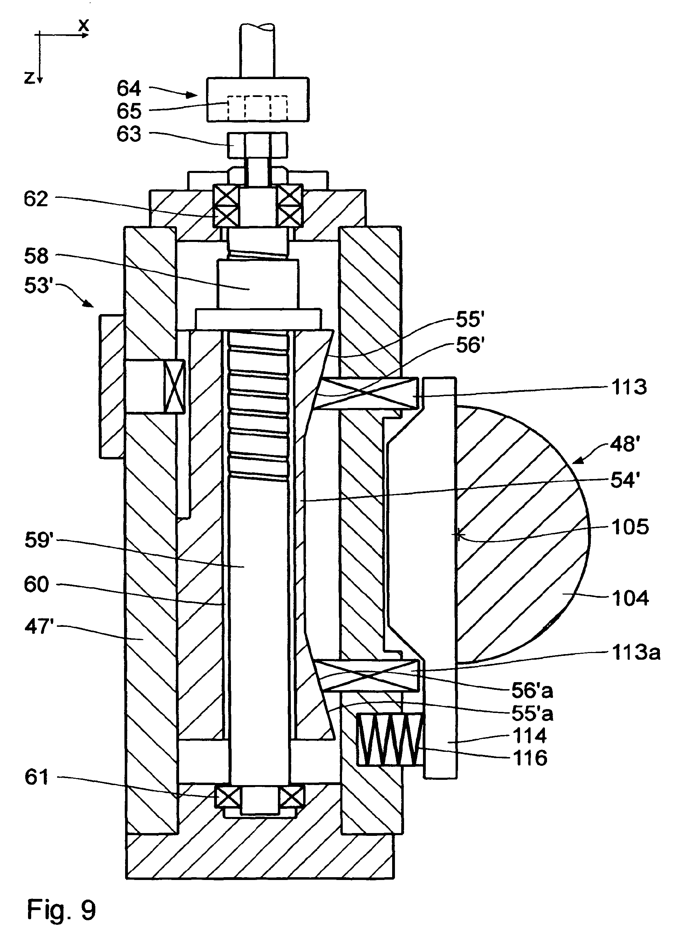

Die Betätigung der Stellwelle 104 erfolgt mittels einer in Fig. 9 dargestellten Verstell-Einrichtung 53', die ähnlich der Verstell-Einrichtung 53 nach Fig. 3 ausgebildet ist. Mit der Gewinde-Spindel 59' ist ein Verstell-Körper 54' verbunden, der zwei gegensinnig aufeinander zu geneigte Keilflächen 55', 55'a aufweist. Diese Keilflächen 55', 55'a liegen an Gegen-Keilflächen 56', 56'a von Betätigungs-Stößeln 113, 113a an. Diese liegen wiederum gegen eine etwa stangenförmige Wippe 114 an, die in einer entsprechenden Ausnehmung 115 der Stellwelle 104 angebracht ist. Im Gehäuse 47' ist eine vorgespannte Schrauben-Druck-Feder 116 angeordnet, die benachbart zum Betätigungs-Stößel 113a gegen die Wippe 114 anliegt und diese damit gegen den Betätigungs-Stößel 113 andrückt, wodurch mögliches Spiel aus diesem System genommen wird. Bei einer Verdrehung der Gewinde-Spindel 59' wird der Verstell-Körper 54' in z-Richtung verschoben, wodurch wiederum die Stellwelle 104 um ihre in y-Richtung verlaufende Achse 105 verschwenkt wird. Diese Verschwenkung führt zu einer Verschiebung des Index-Bolzens 103 überwiegend in x-Richtung und nur zu einer vernachlässigbar geringen Verschiebung des Index-Bolzens 103 in z-Richtung. Diese an sich unerwünschte Verschiebung des Index-Bolzens 103 in z-Richtung, also quer zur gewünschten Verschiebung in x-Richtung, ist vernachlässigbar, weil die Verschwenkungen der Stellwelle 104 um ihre Achse 105 sich im Bereich von maximal ± 10° bewegen. Damit ist eine Bewegung des Werkstücks 37' in x-Richtung um bis zu 0,2 mm möglich. Die Ausgestaltung des Schwert-Bolzens 102 lässt Verschiebungen in x-Richtung um diesen Betrag zu, da der Schwert-Bolzen 102 aufgrund seiner geschilderten schlanken Ausgestaltung die Zentrier-Bohrung 100 in x-Richtung nicht ausfüllt; er liegt nur in z-Richtung mit geringem Spiel an der Zentrier-Bohrung 100 an. Der Radius r der Bohrungen 100, 101 und des Index-Bolzens 103 liegt im Bereich von 2,5 bis 3,0 mm. Der Teilkreis-Radius R der Stellwelle 104 von der Achse 105 bis zur Mittel-Achse 117 des Index-Bolzens 103 liegt im Bereich von 15 bis 20 mm. Der Teilkreis-Radius R entspricht der Exzentrizität des Index-Bolzens 103 gegenüber der Achse 105.

Die Betätigung der Verstell-Einrichtung 53' erfolgt in der gleichen Weise, wie sie oben im Zusammenhang mit Fig. 3 erläutert ist. Durch die geschilderte Verstellung des in Fig. 5 rechts dargestellten Werkstücks 37' in x-Richtung gegenüber dem in Fig. 5 links dargestellten Werkstück 37' erfolgt eine Kompensation von Veränderungen des Abstandes 96 der Werkzeug-Spindeln 18, 19 gegeneinander. Das Ausrichten des Werkstücks 37' erfolgt naturgemäß bei noch nicht festgespannten Spann-Vorrichtungen 98. Erst nach dem Ausrichten erfolgt ein Festspannen des Werkstücks 37'.

## Patentansprüche

1. Doppelspindel-Werkzeugmaschine
- mit einem Ständer (1),
- mit zwei Werkzeug-Spindeln (18, 19), die
-- zueinander parallele, voneinander im Abstand (96) angeordnete Drehachsen (21, 22) aufweisen,
- mit zwei Werkstück-Haltern (32, 33; 32', 33') zur Aufnahme von jeweils einem Werkstück (37; 37')
- mit Einrichtungen zur Relativverschiebung der Werkstücke (37; 37') und der Werkzeug-Spindeln (18, 19) zueinander,
**dadurch gekennzeichnet,**
- **dass** ein Werkstück-Halter (33; 33')
-- eine Grundplatte (34, 34') und
-- ein Widerlager (45; 45') aufweist, das einen parallel zu einer durch die Drehachsen (21, 22) aufgespannten Ebene und quer zur Richtung der Drehachsen (21, 22) verstellbaren Widerlager-Körper (48; 48') aufweist,
- **dass** das Widerlager (45; 45') mit einer Verstell-Einrichtung (53; 53') zur Verstellung des Widerlager-Körpers (48; 48') versehen ist,
- **dass** eine Änderungen des Abstands (96) der Drehachsen (21, 22) erfassende Abstands-Mess-Einrichtung (97) vorgesehen ist,
- **dass** eine Steuerung (95) vorgesehen ist, die
-- einerseits mit der Abstands-Mess-Einrichtung (97) und
-- andererseits mit einer Betätigungs-Einrichtung für die Verstell-Einrichtung (53; 53') verbunden ist und
-- zur Ansteuerung der Betätigungs-Einrichtung in Abhängigkeit von gemessenen Abstands-Änderungen ausgebildet ist und
- **dass** die Verstell-Einrichtung (53; 53') einen mit dem Widerlager-Körper (48; 48') gekoppelten Spindel-Mutter-Trieb (59, 58; 59') auf weist, der von der Betätigungs-Einrichtung betätigbar ist.

2. Doppelspindel-Werkzeugmaschine nach Anspruch 1, **dadurch gekennzeichnet,**
**dass** zwischen dem Spindel-Mutter-Trieb (59, 58; 59') und dem Widerlager-Körper (48; 48') eine Übertragungs-Einrichtung mit einer Keilfläche (55; 55', 55'a) und einer Gegen-Keilfläche (56; 56', 56'a) angeordnet ist.

3. Doppelspindel-Werkzeugmaschine nach Anspruch 1, **dadurch gekennzeichnet,**
**dass** die Verstell-Einrichtung (53; 53') selbsthemmend ausgebildet ist.

4. Doppelspindel-Werkzeugmaschine nach Anspruch 1, **dadurch gekennzeichnet,**
**dass** die Verstell-Einrichtung (53; 53') direkt mittels eines von der zugeordneten Werkzeug-Spindel (19) drehantreibbaren Werkzeugs (64) stufenlos betätigbar ist.

5. Doppelspindel-Werkzeugmaschine nach Anspruch 1, **dadurch gekennzeichnet,**
**dass** die Verstell-Einrichtung (53; 53') mittels einer gesonderten Antriebs-Einrichtung (66) schrittweise betätigbar ist.

6. Doppelspindel-Werkzeugmaschine nach Anspruch 5, **dadurch gekennzeichnet,**
**dass** die Antriebs-Einrichtung (66) einen in einer Verschiebe-Richtung verschiebbaren Antriebs-Körper (68) mit einer Antriebs-Verzahnung (69) zur Betätigung der Verstell-Einrichtung (53) und eine Rast-Verzahnung (72) aufweist, in die ein Verstell-Element (73) und ein Rast-Element (77) jeweils lösbar eingreifen.

7. Doppelspindel-Werkzeugmaschine nach Anspruch 6, **dadurch gekennzeichnet,**
**dass** das Verstell-Element (73) in einem in Verschiebe-Richtung des Antriebs-Körpers (68) verschiebbaren Verstell-Schieber (75) gelagert ist.

8. Doppelspindel-Werkzeugmaschine nach Anspruch 7, **dadurch gekennzeichnet,**
**dass** das Verstell-Element (73) und das Rast-Element (77) quer zur Verschiebe-Richtung des Antriebs-Körpers (68) verschiebbar gelagert sind.

9. Doppelspindel-Werkzeugmaschine nach Anspruch 8, **dadurch gekennzeichnet,**
**dass** ein mit dem Verstell-Element (73) und dem Rast-Element (77) gekoppeltes Entriegelungs-Element (85) vorgesehen ist, bei dessen Verschiebung das Verstell-Element (73) und das Rast-Element (77) außer Eingriff mit dem Antriebs-Körper (68) gebracht werden.

10. Doppelspindel-Werkzeugmaschine nach Anspruch 8 und 9, **dadurch gekennzeichnet,**
**dass** der Verstell-Schieber (75) und das Entriegelungs-Element (85) von der zugeordneten Werkzeug-Spindel (19) betätigbar sind.

11. Doppelspindel-Werkzeugmaschine nach Anspruch 1, **dadurch gekennzeichnet,**
**dass** auf der Grundplatte (34) eine ein Werkstück (37) aufnehmende Werkstück-Tragplatte (35) angeordnet ist und
**dass** die Werkstück-Tragplatte (35) gegen das Widerlager (45) abgestützt ist.

12. Doppelspindel-Werkzeugmaschine nach Anspruch 1, **dadurch gekennzeichnet,**
**dass** der Widerlager-Körper (48') durch eine Stellwelle (104) gebildet ist,
die mittels eines exzentrisch zu ihrer Mittel-Längs-Achse (105) angeordneten Index-Bolzens (103) mit einem Werkstück (37') verbindbar ist und
die mittels der Verstell-Einrichtung (53') um ihre Mittel-Längs-Achse (105) verschwenkbar ist.

13. Doppelspindel-Werkzeugmaschine nach Anspruch 12, **dadurch gekennzeichnet,**
**dass** die Verstell-Einrichtung (53') einen Verstell-Körper (54') aufweist, der zwei gegensinnig geneigte Keilflächen (55', 55'a) aufweist, die gegen jeweils eine Gegen-Keilfläche (56', 56'a) zweier Betätigungs-Stößel (113, 113a) anliegen, die wiederum gegen eine mit der Stellwelle (104) verbundene Wippe (114) anliegen

14. Doppelspindel-Werkzeugmaschine nach Anspruch 13, **dadurch gekennzeichnet,**
**dass** an der Wippe (114) eine vorgespannte Feder (116) angreift.

15. Doppelspindel-Werkzeugmaschine nach Anspruch 12, **dadurch gekennzeichnet,**
**dass** dem Index-Bolzen (103) eine angepasste erste Zentrier-Bohrung (101) im Werkstück (37') zugeordnet ist.

16. Doppelspindel-Werkzeugmaschine nach Anspruch 15, **dadurch gekennzeichnet,**
**dass** die Grundplatte (34') einen Schwert-Bolzen (102) zum Eingriff in eine zweite Zentrier-Bohrung (100) des Werkstücks (37') aufweist.

## Claims

1. Double-spindle machine tool, comprising
- a frame (1);
- two tool-holder spindles (18, 19),
-- which have parallel axes of rotation (21, 22) that are disposed at a distance (96) from one another;
- two workpiece holders (32, 33; 32', 33') for accommodation of a respective workpiece (37; 37');
- devices for displacement of the workpieces (37; 37') relative to the tool-holder spindles (18, 19);
**characterized**
- **in that** a workpiece holder (33; 33') comprises
-- a base plate (34, 34') and
-- an abutment (45; 45') which has an abutment structure (48; 48') that is adjustable parallel to a plane spanned by the axes of rotation (21, 22) and crosswise to the direction of the axes of rotation (21, 22);
- **in that** the abutment (45; 45') is provided with an adjusting device (53, 53') for adjusting the abutment structure (48; 48');
- **in that** a distance measurement device (97) is provided that detects changes in the distance (96) of the axes of rotation (21, 22);
- **in that** a control system (95) is provided,
-- which is connected to the distance measurement device (97) on the one hand and
-- to an actuating device for the adjusting device (53; 53') on the other hand; and
-- which is embodied for triggering the actuating device in dependence on the measured changes in distance; and
-- **in that** the adjusting device (53; 53') has a spindle nut drive (59, 58; 59') which is coupled with the abutment structure (48; 48') and is operable by the actuating device.

2. Double-spindle machine tool according to claim 1, **characterized**
**in that** a transfer device is disposed between the spindle nut drive (59, 58; 59') and the abutment structure (48; 48'), said transfer device having a wedge surface (55; 55'; 55'a) and a counterpart wedge surface (56; 56', 56'a).

3. Double-spindle machine tool according to claim 1, **characterized**
**in that** the adjusting device (53; 53') is self-locking.

4. Double-spindle machine tool according to claim 1, **characterized**
**in that** the adjusting device (53; 53') is continuously operable directly by a tool (64) that is rotatably drivable by the associated tool-holder spindle (19).

5. Double-spindle machine tool according to claim 1, **characterized**
**in that** the adjusting device (53; 53') is step-wise operable by a separate drive mechanism (66).

6. Double-spindle machine tool according to claim 5, **characterized**
**in that** the drive mechanism (66) comprises a drive structure (68) which is displaceable in a direction of displacement, said drive structure (68) having driving teeth (69) for operating the adjusting device (53) and locking teeth (72) which engage releasably with an adjusting element (73) and a locking element (77).

7. Double-spindle machine tool according to claim 6, **characterized**
**in that** the adjusting element (73) is mounted in an adjusting slide (75) which is displaceable in the direction of displacement of the drive structure (68).

8. Double-spindle machine tool according to claim 7, **characterized**
**in that** the adjusting element (73) and the locking element (77) are displaceably mounted crosswise to the direction of displacement of the drive structure (68).

9. Double-spindle machine tool according to claim 8, **characterized**
**in that** an unlatching element (85) is provided which is coupled with the adjusting element (73) and the locking element (77), and upon displacement thereof the adjusting element (73) and the locking element (77) are disengaged from the drive structure (68).

10. Double-spindle machine tool according to claim 8 and 9, **characterized**
**in that** the adjusting slide (75) and the unlatching element (85) are operable by the associated tool-holder spindle (19).

11. Double-spindle machine tool according to claim 1, **characterized**
**in that** a workpiece carrier plate (35), which receives a workpiece (37), is disposed on the base plate (34); and
**in that** the workpiece carrier plate (35) is supported against the abutment (45).

12. Double-spindle machine tool according to claim 1, **characterized**
**in that** the abutment structure (48') is a setting shaft (104),
- which is connectable to a workpiece (37') by an index bolt (103) that is disposed eccentrically to its central longitudinal axis (105) and
- which is pivotable about its central longitudinal axis (105) by the adjusting device (53').

13. Double-spindle machine tool according to claim 12, **characterized**
**in that** the adjusting device (53') comprises an adjusting structure (54') which has two wedge surfaces (55', 55'a) which are inclined in opposite directions and which bear against a respective counterpart wedge surface (56', 56'a) of two actuating tappets (113, 113a) which in turn rest on a rocker (114) that is connected to the setting shaft (104).

14. Double-spindle machine tool according to claim 13, **characterized**
**in that** a pre-loaded spring (116) acts on the rocker (114).

15. Double-spindle machine tool according to claim 12, **characterized**
**in that** an adapted first centering bore (101) in the workpiece (37') is associated to the index bolt (103).

16. Double-spindle machine tool according to claim 15, **characterized**
**in that** the base plate (34') comprises a sword-type bolt (102) for engagement with a second centering bore (100) of the workpiece (37').

## Revendications

1. Machine-outil bibroche
- avec un montant (1)
- avec deux broche-outils (18, 19), qui présentent
-- des axes de rotation (21, 22), disposés parallèlement, selon un écart (96),
- avec deux porte-outils (32, 33 ; 32', 33') servant chacun à la prise d'un outil (37, 37')
- avec des dispositifs pour le déplacement des outils (37, 37') et des broche-outils (18, 19) relativement l'un à l'autre,
**caractérisée en ce que**
- un porte-outil (33, 33') présente
-- un socle (34, 34') et
-- une culée (45, 45') qui présente corps de culée (48, 48'), parallèlement à un plan s'étendant en travers des axes de rotation (21, 22) et perpendiculairement au sens des axes de rotation (21, 22),
- **en ce que** la culée (45, 45') est équipé d'un dispositif de déplacement (53, 53') pour le déplacement du corps de culée (48, 48')
- **en ce qu**'un dispositif de mesure d'écart (97) contrôlant les changements de l'écart (96) des axes de rotation (21, 22), est prévu
- **en ce que** une commande (95) est prévue, qui
- - d'un côté, est reliée au dispositif de mesure d'écart (97) et
- - d'un autre côté, est reliée à un dispositif d'actionnement pour le dispositif de déplacement (53, 53') et
- - est conçue pour le guidage du dispositif d'actionnement en fonction des changements d'écart mesurés, et
- **en ce que** le dispositif de déplacement (53, 53') présente une transmission écrou-broche (59, 58, 59') couplée avec le corps de culée (48, 48'), et qui peut être actionnée par le dispositif d'actionnement.

2. Machine-outil bibroche selon la revendication 1,
**caractérisée en ce que**,
entre la transmission écrou-broche (59, 58, 59') et le corps de culée (48, 48'), est placé un dispositif de transfert avec une cale (55, 55', 55'a) et une contre-surface conique (56, 56', 56'a).

3. Machine-outil bibroche selon la revendication 1,
**caractérisée en ce que**,
le dispositif de déplacement (53, 53') est prévu pour s'arrêter automatiquement.

4. Machine-outil bibroche selon la revendication 1,
**caractérisée en ce que**,
le dispositif de déplacement (53, 53') peut être actionné sans graduation à l'aide des outils (64) mis en rotation par la broche-outil (19) affectée.

5. Machine-outil bibroche selon la revendication 1,
**caractérisée en ce que**,
le dispositif de déplacement (53, 53') est actionnable graduellement à l'aide d'un dispositif d'actionnement (66) spécial.

6. Machine-outil bibroche selon la revendication 5,
**caractérisée en ce que**,
le dispositif d'actionnement (66) présente un corps d'actionnement (68) déplaçable dans un sens de déplacement, avec un engrenage d'actionnement (69) pour l'actionnement du dispositif de déplacement (53) et un engrenage d'arrêt (72), dans lequel un élément de déplacement (73) et un élément d'arrêt (77) déblocables, s'enclenchent.

7. Machine-outil bibroche selon la revendication 6,
**caractérisée en ce que**,
l'élément de déplacement (73) est placé dans un poussoir de déplacement (75), déplaçable dans le sens de déplacement du corps d'actionnement (68).

8. Machine-outil bibroche selon la revendication 7,
**caractérisée en ce que**,
l'élément de déplacement (73) et l'élément d'arrêt (77) sont placés de façon à être mobile, perpendiculairement au sens de déplacement du corps d'actionnement (68).

9. Machine-outil bibroche selon la revendication 8,
**caractérisée en ce que**,
un élément de déverrouillage (85), couplé avec l'élément de déplacement (73) et l'élément d'arrêt (77), est prévu, lors du déplacement duquel, l'élément de déplacement (73) et l'élément d'arrêt (77) sont mis hors de prise avec le corps d'actionnement (68).

10. Machine-outil bibroche selon les revendications 8 et 9, **caractérisée en ce que**,
le poussoir de déplacement (75) et l'élément de déverrouillage (85) sont actionnable par la broche-outil (19) affectée.

11. Machine-outil bibroche selon la revendication 1, **caractérisée**
**en ce que**,une plaque de support-outil (35) recevant un outil (37), est placée sur la plaque de base (34) et
**en ce que** la plaque de support-outil (35) est appuyée contre la culée (45).

12. Machine-outil bibroche selon la revendication 1, **caractérisée**
**en ce que**, le corps de culée (48') est constitué par un bras de guidage (104),
qui peut être relié à un outil (37') à l'aide d'un boulon index (103) placé excentriquement à son axe longitudinal central (105) et
qui est pivotant sur son axe longitudinal central, à l'aide du dispositif de déplacement (53').

13. Machine-outil bibroche selon la revendication 12, **caractérisée**
**en ce que**, le dispositif de déplacement (53') présente un corps de déplacement (54'), qui présente deux cales (55, 55') penchées dans la direction opposée l'une à l'autre, qui jouxtent chacune une contre-cale (56, 56'a) de deux poussoirs d'actionnement (113, 113a), qui eux, jouxtent une bascule (114), reliée au bras de guidage (104).

14. Machine-outil bibroche selon la revendication 13, **caractérisée**
**en ce que**, un ressort précontraint accroche sur la bascule (114).

15. Machine-outil bibroche selon la revendication 12, **caractérisée**
**en ce que**, une perforation centrale adaptée dans l'outil (101), est adaptée au boulon index (37').

16. Machine-outil bibroche selon la revendication 15, **caractérisée**
**en ce que**, la plaque de base (34') présente un boulon à couteau (102) pour la prise dans une deuxième perforation centrale (100) de l'outil (37').
